# EUROPÄISCHE PATENTSCHRIFT

(11) **EP 1 260 424 B1**
(45) Veröffentlichungstag und Bekanntmachung des Hinweises auf die Patenterteilung: **04.02.2004**
(21) Anmeldenummer: 02003245.4
(22) Anmeldetag: 21.02.2002
(51) Int. Cl.: B62D 5/04

(54) **Übertragungseinheit**
Transmission unit
Unité de transmission

(30) Priorität: 25.05.2001 DE 10125403
(43) Veröffentlichungstag der Anmeldung: 27.11.2002
(73) Patentinhaber: Valeo Schalter und Sensoren GmbH, 74321 Bietigheim-Bissingen (DE)
(72) Erfinder: Morgenroth, Thorsten, 74357 Bönnigheim (DE); Hecht, Walter, 74321 Bietigheim-Bissingen (DE); Klein, Rudolf, 74348 Lauffen a.N. (DE)
(74) Vertreter: Steimle, Josef, Dipl.-Ing.

(56) Entgegenhaltungen:
- DE-A- 19 933 047
- DE-A- 19 933 049

## Beschreibung

Die Erfindung betrifft eine Übertragungseinheit mit einem ortsfest an einem Fahrzeug anordenbaren Stator und mit einem mit dem Lenkrad bzw. mit der Lenksäule eines Fahrzeuges verbindbaren Rotor, mit Lagermitteln zur drehbaren Lagerung des Rotors gegenüber dem Stator und mit einem Wickelband zur Übertragung von elektrischen Signalen zwischen dem Rotor und dem Stator. Derartige Übertragungseinheiten sind auch als Wickelfederverbinder, Uhrfederverbinder oder Airbagübertragungseinheiten bekannt. Sie haben in Fahrzeugen die Aufgabe, Signale zwischen ortsfest im Fahrzeug angeordneten Anschlüssen zu im Lenkrad angeordneten Anschlüssen zu übertragen. Diese Übertragung muss sehr sicher sein, da innerhalb des Lenkrades eine Reihe von Sicherheitseinrichtungen, wie Hupe oder Airbag, angebracht sein können. Es muss sichergestellt sein, dass über das Wickelband bei vollem Lenkeinschlag, der mehrere Lenkradumdrehungen umfasst, Hubsignale oder Zündsignale für Airbags sicher übertragen werden. Neben den bekannten Übertragungseinheiten sehen Fahrzeuge ferner Lenkwinkelsensoren vor, die eine mit dem Lenkrad bzw. der Lenksäule drehfest verbundene Codierscheibe umfassen. Derartige Sensoren haben die Aufgabe, ein Signal zu erzeugen, welches kennzeichnend für den Lenkwinkel bzw. die Lenkwinkeländerung des Fahrzeuges ist.

DE 19933047 A beschreibt ein lenkstuckmodul mit einer Codierscheibe und mit einem Träger gemäß dem Oberbegriff des Anspruchs 1.

Gemäß dem bekannten Stand der Technik werden die Übertragungseinheiten und die Lenkwinkelsensoren als voneinander getrennte Baugruppen im Bereich des Lenkrades um die Lenksäule angeordnet. Hierfür ist entsprechender Bauraum zur Verfügung zu stellen. Außerdem ist eine Vielzahl von verschiedenen Bauteilen für zum einen die Übertragungseinheit und zum anderen den Lenkwinkelsensor vorzusehen.

Der vorliegenden Erfindung liegt deshalb die Aufgabe zugrunde, eine Übertragungseinheit bereitzustellen, die insbesondere in Kombination mit einem Lenkwinkelsensor möglichst wenig Bauraum beansprucht. Außerdem sollen möglichst wenig verschiedene Bauteile Verwendung finden.

Diese Aufgabe wird bei einer Übertragungseinheit der eingangs genannten Art erfindungsgemäß dadurch gelöst, dass ein Mitnehmer mittelbar über ein Ausgleichsstück mit dem Rotor drehfest verbunden ist, wobei über das Ausgleichsstück ein radialer Versatz der Längsachse der Lenksäule und der Drehachse des Mitnehmers ausgeglichen werden kann, und dass an den Mitnehmer eine Codierscheibe eines Lenkwinkelmesssystems befestigt ist.

Eine derartige Übertragungseinheit hat den Vorteil, dass für die Codierscheibe eines Lenkwinkelmesssystems keine separate Lagerung vorzusehen ist. Vielmehr kann die Codierscheibe, falls ein Lenkwinkelsensor vorgesehen ist, mit dem Rotor über das Ausgleichsstück und den Mitnehmer drehfest befestigt werden. Durch die entsprechende Lagerung des Rotors gegenüber dem Stator wird gewährleistet, dass ein radialer Versatz der Längsachse der Lenksäule und der Drehachse des Mitnehmers, und damit der Drehachse einer an dem Mitnehmer befestigbaren Codierscheibe, sowie Rundlauffehler der Lenksäule gegenüber dem Stator ausgeglichen werden. Dies hat den Vorteil, dass sich aus einem radialen Versatz der Längsachse der Lenksäule und der Drehachse der Codierscheibe ergebende Winkelfehler, die das Messergebnis des Lenkwinkelmesssystems verfälschen, eliminiert werden.

Ein weiterer Vorteil der erfindungsgemäßen Übertragungseinheit ist, dass über die Möglichkeit der Anordnung der Codierscheibe des Lenkwinkelmesssystems an dem Rotor keine zusätzliche Lagerstelle für die Codierscheibe erforderlich ist. Die erfindungsgemäße Übertragungseinheit baut damit sehr kompakt.

Erfindungsgemäß ist denkbar, dass die Lagermittel einen an dem Rotor angeordneten, hülsenartigen Abschnitt umfassen, der eine an dem Stator vorhandene Aussparung mit einem vorgegebenen Radialspiel durch- und/oder hintergreift. Der von dem hülsenartigen Abschnitt gebildete Durchbruch dient hierbei zur Aufnahme der Lenksäule. Aufgrund des Durchund/oder Hintergreifens der Statoraussparung kann innerhalb eines vorgegebenen Spieles sowohl eine axiale als auch eine radiale Lagerung auf einfache Art und Weise realisiert werden. Das vorgegebene Radialspiel beträgt vorzugsweise 1 - 2 mm, um die Einwirkung von radialen Kräften auf den Mitnehmer bzw. auf die Codierscheibe zu verhindern. Rundlauffehler der Lenksäule und/oder des Mitnehmers können ausgeglichen werden, ohne dass der Roter und/oder der Stator einer unerwünscht hohen Beanspruchung unterliegt.

Zur axialen Lagerung des Rotors an dem Stator kann erfindungsgemäß vorgesehen sein, dass der hülsenartige Abschnitt Rastmittel und insbesondere Rastnasen aufweist, die mit an dem Rotor vorhandenen entsprechenden Rastmitteln, insbesondere Rastausbuchtungen, zusammenwirken. Dies hat den Vorteil, dass insbesondere durch axiales Ineinanderstecken des Rotors und des Stators eine Verrastung erfolgt, die den Rotor in axialer Richtung gegenüber dem Stator sichert.

Erfindungsgemäß ist ebenfalls denkbar, dass der hülsenartige Abschnitt zur Lagerung und insbesondere zur axialen Lagerung des Rotors mit einem Gegenstück verschraubbar ausgebildet ist. Dazu kann der hülsenartige Abschnitt durch die am Stator vorhandene Aussparung gesteckt werden, wobei der die Aussparung durchgreifende Abschnitt des hülsenartigen Abschnitts mit einem Gegenstück, insbesondere mit einer Kontermutter, verschraubt werden kann.

Zur Halterung des Mitnehmers an dem Rotor kann erfindungsgemäß vorgesehen sein, dass der Mitnehmer in axialer Richtung über Rastmittel an dem Rotor gehaltert ist, wobei zwischen dem Mitnehmer und dem Rotor das Ausgleichsstück gefangen gehaltert ist. Die Rastmittel haben hierbei ein radiales Spiel zwischen dem Rotor und dem Mitnehmer zu gewährleisten. Über dieses radiale Spiel kann ein radialer Versatz der Längsachse der Lenksäule und der Drehachse des Mitnehmers ausgeglichen werden. Durch das radiale Spiel können ferner Rundlauffehler ausgeglichen werden. Dadurch, dass das Ausgleichsstück zwischen dem Rotor und dem Mitnehmer gefangen gehaltert ist, kann der Rotor mit Mitnehmer und Ausgleichsstück als separate Baugruppe vormontiert werden.

Zur positionsgenauen und dauerhaften Befestigung der Codierscheibe an dem Mitnehmer kann erfindungsgemäß vorgesehen sein, dass der Mitnehmer Rastnasen und/oder Rastbuchten ausweist, die mit an der Codierscheibe entsprechend vorhandenen Rastbuchten und/oder Rastnasen zusammenwirken. Eine derartige Rastverbindung hat insbesondere den Vorteil, dass keine zusätzlichen Befestigungsmittel vorzusehen sind. Vorteilhafterweise kann die Codierscheibe zur Verrastung mit dem Mitnehmer axial auf den Mitnehmer aufgeschoben werden.

Andererseits ist erfindungsgemäß denkbar, dass der Mitnehmer zur Befestigung der Codierscheibe mit der Codierscheibe verschraubt werden kann.

Bei einer vorteilhaften Ausgestaltung der Erfindung ist der Mitnehmer einstückig mit einer Codierscheibe eines Lenkwinkelmesssystems ausgebildet. Diese Ausbildung ist insbesondere dann von Vorteil, wenn die erfindungsgemäße Übertragungseinheit mit einem Lenkwinkelmesssystem kombiniert wird. Vorteilhafterweise verringert sich die Anzahl der einzelnen Bauteile der Übertragungseinheit mit Lenkwinkelmesssystem. Weiterhin wird der Rundlauf der Codierscheibe erhöht, da aufgrund der geringeren Anzahl von Bauteilen geringere Toleranzabweichungen auftreten.

Bei einer weiteren, besonders bevorzugten Ausführungsform der Erfindung ist vorgesehen, dass an dem Stator, insbesondere auf der dem Rotor abgewandten Seite des Stators, ein Lenkwinkelmesssystem mit Mitteln zur Erfassung der Winkelstellung der an den Mitnehmer anordenbaren Codierscheibe angeordnet ist bzw. angeordnet werden kann. Eine derartige Ausbildung des Stators hat den Vorteil, dass für den Fall, dass ein Lenkwinkelmesssystem vorgesehen wird, dieses an dem Stator, ohne Verwendung eines zusätzlichen Gehäuseteils, angeordnet werden kann.

Falls die Übertragungseinheit ein Lenkwinkelmesssystem aufweist, ist erfindungsgemäß denkbar, dass die dem Rotor abgewandte Seite des Stators, und damit das Lenkwinkelmesssystem, mit einem Gehäuseverschlussteil abdeckbar ist. Dadurch wird das Lenkwinkelmesssystem vor Umwelteinflüssen geschützt.

Zur Befestigung der Übertragungseinheit und insbesondere des Stators an das Fahrzeug kann erfindungsgemäß vorgesehen sein, dass die dem Rotor abgewandte Seite des Stators Befestigungsmittel aufweist. Die Befestigungsmittel können hierbei insbesondere Rasthaken sein, die mittel- oder unmittelbar mit dem Fahrzeug verrastet werden können.

Falls die Übertragungseinheit ein Lenkwinkelmesssystem vorsieht, das mit einem Gehäuseverschlussteil abgedeckt ist, ist erfindungsgemäß denkbar, dass das Gehäuseverschlussteil Aussparungen aufweist, durch die die an dem Stator angeordneten Befestigungsmittel greifen. Vorteilhafterweise kann demnach der Stator in identischer Bauweise Verwendung finden, unabhängig davon, ob die Übertragungseinheit ein Lenkwinkelmesssystem vorsieht oder nicht. Sieht die Übertragungseinheit ein Lenkwinkelmesssystem vor, so wird dieses mit dem Gehäuseverschlussteil abgedeckt, wobei die Befestigungsmittel durch die an dem Gehäuseverschlussteil vorhandenen Aussparungen ragen.

Erfindungsgemäß ist auch denkbar, dass das Gehäuseverschlussteil auf der dem Stator abgewandten Seite Befestigungsmittel zur Befestigung des Stators an das Fahrzeug vorsieht. Der Stator zur Aufnahme des Lenkwinkelmesssystems unterscheidet sich demnach von dem Stator, der kein Lenkwinkelmesssystem aufweist und deshalb kein Gehäuseverschlussteil mit Befestigungsmittel vorsieht, durch die an dem Stator vorgesehenen Befestigungsmittel. Zur Fertigung des Stators ohne Befestigungsmittel können vorteilhafterweise die gleichen Formwerkzeuge - bis auf diejenigen Wechseleinsätze des Werkzeugs, die die Befestigungsmittel formen - Verwendung finden.

Bei einer weiteren, ebenfalls besonders bevorzugten Ausführungsform der Erfindung ist vorgesehen, dass das Ausgleichsstück ein Ausgleichsring ist, der gegenüber dem Rotor entlang eines ersten Radius und gegenüber dem Mitnehmer entlang eines zweiten Radius verschiebbar ist, wobei der Winkel zwischen den beiden Radien vorzugsweise 90° beträgt. Über ein derartiges Ausgleichsstück kann insbesondere ein radialer Versatz der Längsachse der Lenksäule und der Drehachse des Mitnehmers bzw. der Codierscheibe ausgeglichen werden. Hierdurch wird vorteilhafterweise gewährleistet, dass der Mitnehmer bzw. die Codierscheibe trotz eines relativ großen, vorgegebenen radialen Spiels des Rotors um eine definierte, vorgegebene Achse spielarm drehbar gelagert ist. Damit wird die Tangentialkraft der Lenksäule nicht direkt, sondern über das Ausgleichsstück spielfrei übertragen. In radialer Richtung hat das Ausgleichsstück jedoch zwei Freiheitsgrade, die es erlauben, einen eventuell vorhandenen Versatz der Längsachse der Lenksäule und der Drehachse des Mitnehmers sowie Rundlauffehler der Lenksäule und/oder des Mitnehmers auszugleichen.

Vorteilhafterweise weist der Ausgleichsring auf der einen Seite entlang des ersten Radius und auf der anderen Seite entlang des zweiten Radius jeweils zwei nutartige Aussparungen auf, wobei die dem Ausgleichsring zugewandte Seite des Rotors und die dem Ausgleichsring zugewandte Seite des Mitnehmers je zwei in die entsprechenden Aussparungen greifende stegartige Nasen aufweist. Dies hat den Vorteil, dass mit sehr einfachen Mitteln ein vorhandener Radialversatz ausgeglichen werden kann, ohne dass aufwendig zu fertigende Teile,- die zudem entsprechend viel Bauraum beanspruchen, Verwendung finden. Der Ausgleichsring kann aufgrund der versetzt zueinander angeordneten Radien mit den entsprechenden in radialer Richtung verlaufenden nutartigen Aussparungen sehr flach und damit platzsparend ausgebildet werden. Entsprechend flach und platzsparend können die stegartigen, die Aussparungen greifenden Nasen an dem Rotor und an dem Mitnehmer ausgebildet werden, ohne dass sich dies nachteilig auf die drehfeste Verbindung der Codierscheibe mit dem Lenkrad bzw. mit der Lenksäule auswirkt.

Weitere vorteilhafte Ausgestaltungen und Einzelheiten sind der folgenden Beschreibung zu entnehmen, in der die Erfindung anhand der in der Zeichnung dargestellten Ausführungsbeispiele näher beschrieben und erläutert ist.

In der Zeichnung zeigen:
- Fig. 1:: eine erfindungsgemäße Übertragungseinheit in Explosionsdarstellung ohne ein Lenkwinkelmesssystem;
- Fig. 2:: die in Fig. 1 dargestellte Übertragungseinheit im montierten Zustand im Längsschnitt;
- Fig. 3:: eine zweite erfindungsgemäße Übertragungseinheit im montierten Zustand im Längsschnitt;
- Fig. 4:: eine dritte erfindungsgemäße Übertragungseinheit in Explosionsdarstellung mit Lenkwinkelmesssystem;
- Fig. 5:: die Übertragungseinheit gemäß Fig. 4 im montierten Zustand im Längsschnitt;
- Fig. 6:: die Übertragungseinheit gem. Fig. 4 und 5, verbaut mit einem Lenkstockschalter; und
- Fig. 7:: die Übertragungseinheit und der Lenkstockschalter gem. Fig. 6 in demontiertem Zustand.

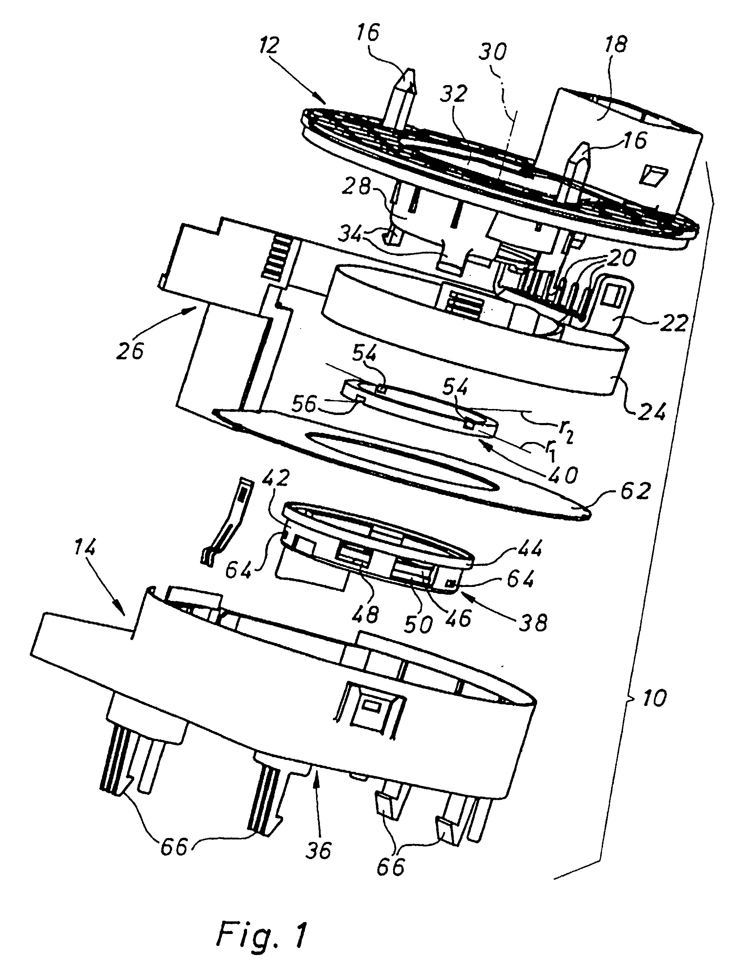

In der Fig. 1 ist eine erste erfindungsgemäße Übertragungseinheit 10 gezeigt, die einen mit einem Lenkrad bzw. einer Lenksäule drehfest verbindbaren Rotor 12 umfasst. Die Übertragungseinheit 10 wird auch als Wickelfederverbinder oder als Airbagübertragungseinheit bezeichnet. Im montierten Zustand der Übertragungseinheit 10 ist der Rotor 12 gegenüber einem Stator 14 drehbar gelagert.

Zur Anbindung an das Lenkrad eines Fahrzeuges weist der Rotor 12 an seiner Oberseite zwei Zapfenelemente 16 sowie eine Lenkradsteckerbuchse 18 auf. Die Lenkradsteckerbuchse 18 ist zur Aufnahme von Steckerpins 20 vorgesehen, die auf einem Steckerträger 22 angeordnet sind. Im montierten Zustand werden die Steckerpins 20 mit lenkradseitig angeordneten Schaltern oder Auslösern elektrisch verbunden.

Fig. 1 zeigt ferner ein Wickelband 24 mit einer Vielzahl von parallel zueinander verlaufenden elektrischen Leitungen. Die elektrischen Leitungen des Wickelbands 24 sind einerends mit den Steckerpins 20 und andererends mit einem Steckerelement 26 verbunden. Im montierten Zustand ist das Steckerelement 26 ortsfest an dem Stator 14 angeordnet. Das Steckerelement 26 ist zur elektrischen Kontaktierung mit dem Bordnetz des Fahrzeuges vorgesehen.

Das Wickelband 24 ist im montierten Zustand um einen hülsenartigen Abschnitt 28 des Rotors 12 derart locker gewickelt, dass es eine mehrfache Umdrehung des Rotors 12 um die Rotordrehachse 30 in die beiden möglichen Verdrehrichtungen zulässt. Der hülsenartige Abschnitt 28 umgibt einen Durchbruch 32, der zur Aufnahme einer nicht dargestellten Lenksäule eines Fahrzeuges vorgesehen ist.

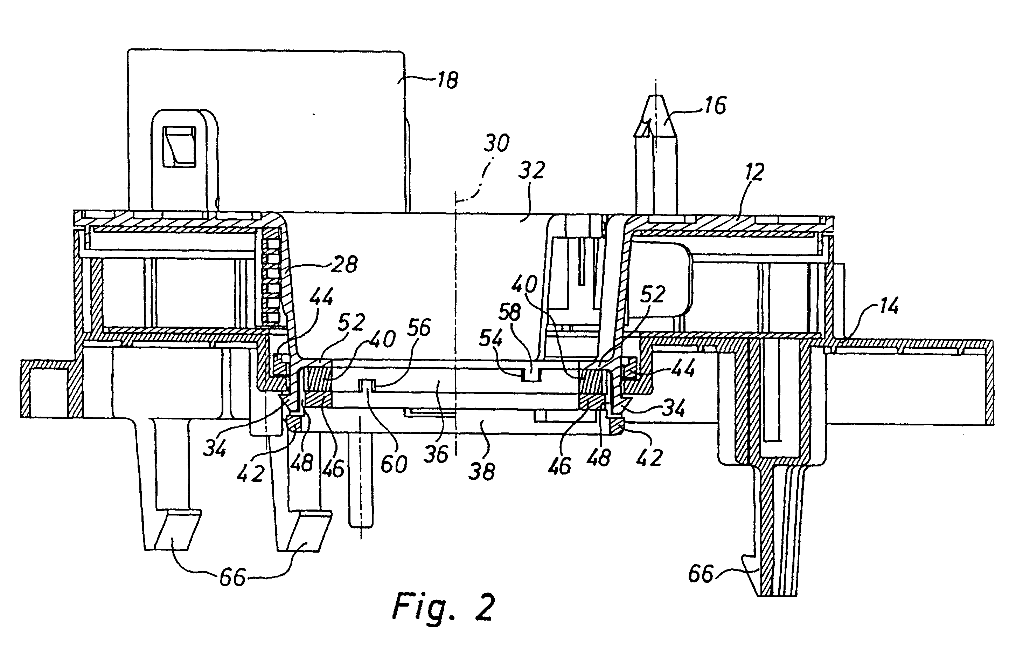

Der hülsenartige Abschnitt 28 sieht ferner an seinem freien Randbereich mehrere, sich in axiale Richtung erstreckende, in radialer Richtung elastisch nachgiebig ausgebildete Rasthaken 34 vor. Im montierten Zustand, wie er in Fig. 2 dargestellt ist, greifen die Rasthaken 34 mit einem definierten Radialspiel von ca. 1 - 2 mm in eine Aussparung 36 des Stators 14, die axial zu dem Durchbruch 32 des Rotors 12 verläuft. Die Rasthaken 34 in der Aussparung 36 lagern damit den Rotor 12 drehbar in den Stator 14.

Mit dem Rotor 12 bzw. mit dessen hülsenartigem Abschnitt 28 ist ein Mitnehmer 38 drehfest über ein Ausgleichsstück in Form eines Ausgleichringes 40 verbunden.

Wie aus Fig. 1 deutlich wird, weist der Mitnehmer eine sich in axiale Richtung erstreckende Ringwandung 42 auf, an deren dem Rotor 12 zugewandten Oberkante ein sich radial nach außen erstreckender Ringbund 44 angeordnet ist. Der Mitnehmer 38 sieht ferner auf der Innenseite der Ringwandung 42 einen sich radial nach innen erstreckenden Innenringbund 46 vor. Die Ringwandung 42 sieht verschiedene Aussparungen 48 vor, die zur Aufnahme der Rasthaken 34 dienen. Neben der Aussparung 48 ist in Fig. 1 eine weitere Aussparung 50 in der Ringwandung 42 dargestellt, durch welche der Innenringbund 46 sichtbar ist.

Im montierten Zustand gemäß Fig. 2 greifen die Rasthaken 34 axial in die Aussparungen 48 der Ringwandung 42 und verrasten mit dem Randbereich der Aussparung 36 des Stators 14. Vorteilhafterweise sind entlang der freien Kante des hülsenartigen Abschnitts 28 vier Rasthaken 34 vorgesehen.

Wie insbesondere aus Fig. 2 deutlich wird, sieht der hülsenartige Abschnitt 28 einen radial in den Durchbruch 32 ragenden ringförmigen Steg 52 auf. Zwischen dem Steg 52 und dem Innenringbund 46 des Mitnehmers 38 ist der Ausgleichsring 40 angeordnet. Der Ausgleichsring 40 ist somit zwischen dem Steg 52 des Rotors 12 und dem Innenringbund 46 des Mitnehmers 38 gefangen gehaltert.

Der Ausgleichsring 40 weist auf seiner dem Rotor zugewandten Seite entlang eines ersten Radius r₁ zwei nutartige Aussparungen 54 auf. Auf der dem Mitnehmer 38 zugewandten Seite weist der Ausgleichsring 40 entlang eines zweiten Radius r₂ zwei weitere nutartige Aussparungen 56 auf. Der Winkel zwischen den beiden Radien r₁ und r₂ beträgt 90°. Auf dem Steg 52 des Rotors 12 sind zwei in radialer Richtung verlaufende stegartige Nasen 58 angeordnet, die im montierten Zustand in die Aussparungen 54 eingreifen. Entsprechend sind an den Innenringbund 46 des Mitnehmers 38 zwei entlang einer Linie angeordnete weitere stegartige Nasen 60 vorgesehen, die in die nutartigen Aussparungen 56 des Ausgleichsrings 40 eingreifen. Damit hat der Mitnehmer 38 gegenüber dem Rotor in radialer Richtung entlang der Radien r₁ und r₂ zwei Freiheitsgrade, die es erlauben, einen eventuellen Versatz der Längsachse der Lenksäule und der Drehachse des Mitnehmers sowie Rundlauffehler der Lenksäule und/oder des Mitnehmers auszugleichen. Eine derartige Lagerung ermöglicht den Ausgleich eines Radialspiels von 1 - 2 mm des Rotors 12 gegenüber dem spielarm gelagerten Mitnehmer 38.

Fig. 1 sieht ferner ein Vlies 62 vor, das zwischen dem Wickelband 24 und dem Stator 14 zur Geräuschdämmung beim Auf- und Abwickeln des Wickelbandes 24 dient.

Der den Stator 14 durchgreifende Abschnitt der Ringwandung 42 des Mitnehmers 38 sieht Mittel in Form von Einbuchtungen 64 vor, die zur Befestigung einer in den Fig. 1, 2 und 3 nicht dargestellten Codierscheibe dienen.

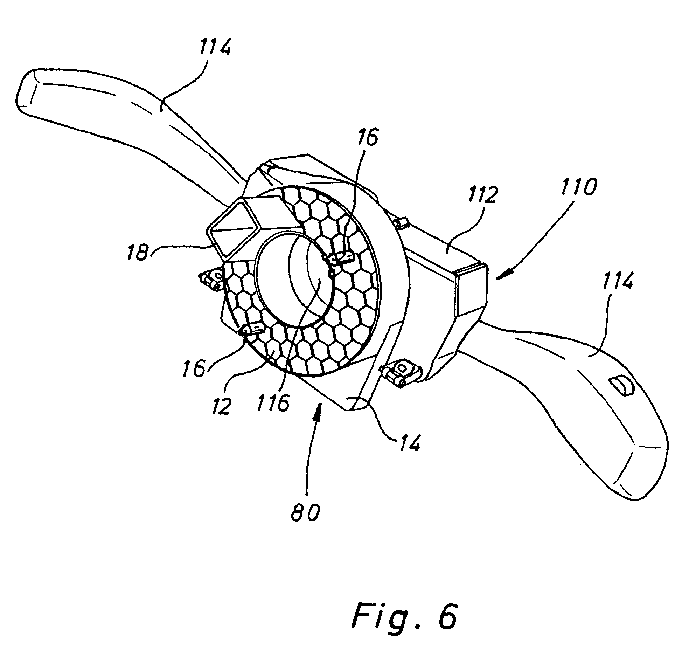

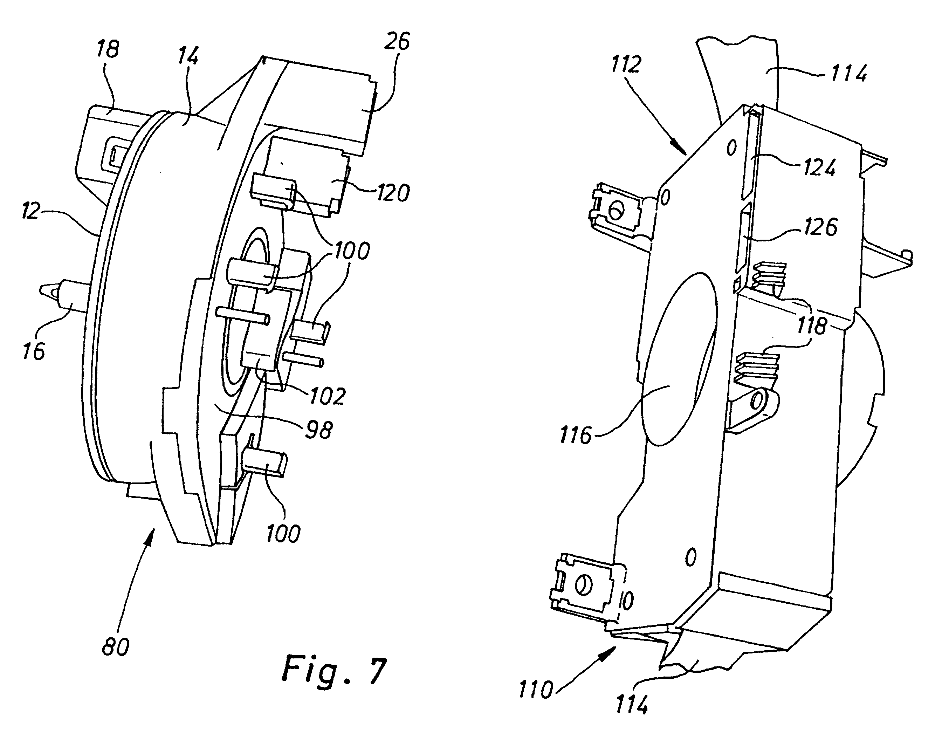

Auf der dem Rotor 12 abgewandten Seite des Stators 14 sind verschiedene Befestigungs- und Kommunikationsmittel 66 angeordnet. Die Befestigungsmittel 66 dienen zur Anbindung des Stators 14 an das Fahrzeug bzw. an den in den Fig. 6 und 7 dargestellten Lenkstockschalter 110.

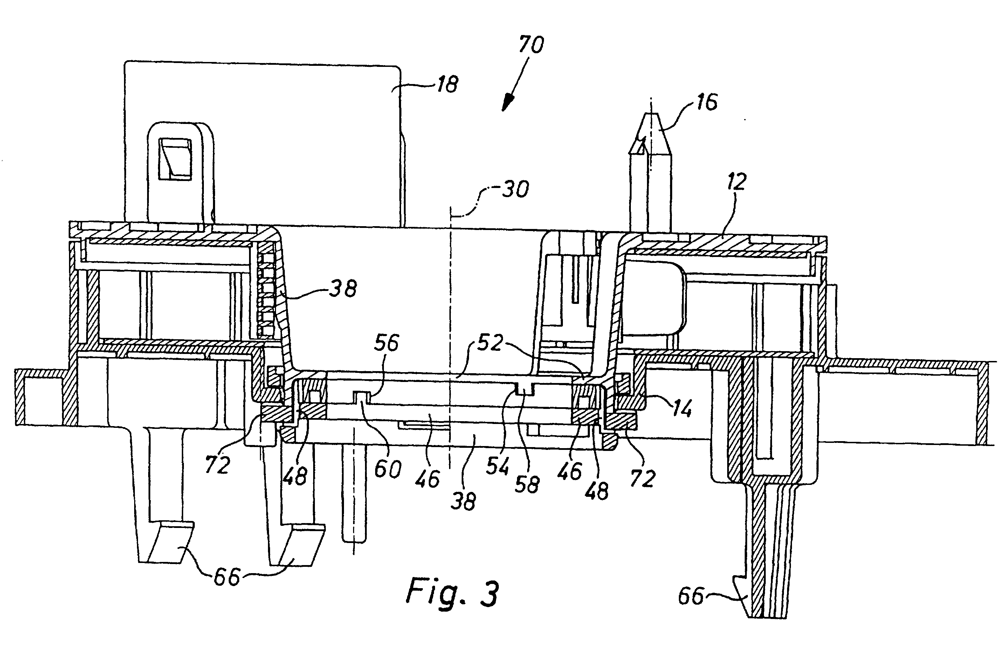

Die in Fig. 3 dargestellte Übertragungseinheit 70 entspricht im Wesentlichen der Übertragungseinheit 10 gemäß den Fig. 1 und 2. Im Unterschied zu der Übertragungseinheit 10 sind zur Befestigung des Rotors 12 an dem Stator 14 keine Rasthaken 34 vorgesehen. Vielmehr ist an dem freien Ende des hülsenartigen Abschnitts 28 ein Gegenstück 72 in Form eines Ringelements befestigt. Die Befestigung kann insbesondere durch Verschrauben des Gegenstücks 72 mit dem hülsenartigen Abschnitt 28 erfolgen.

Zwischen dem hülsenartigen Abschnitt 28 bzw. dem Gegenstück 72 und der den Rotor 12 aufnehmenden Aussparung 36 des Stators 14 ist ein entsprechend großes Spiel vorgesehen, das die geforderte Beweglichkeit des Rotors 12 gegenüber dem Stator 14 ermöglicht.

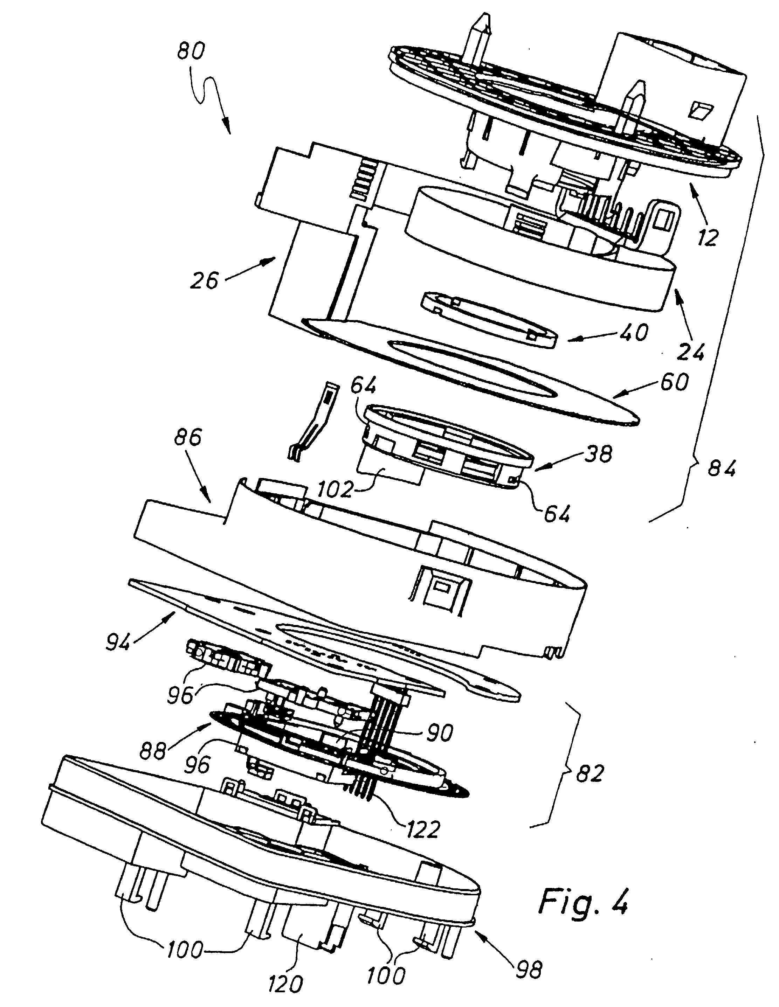

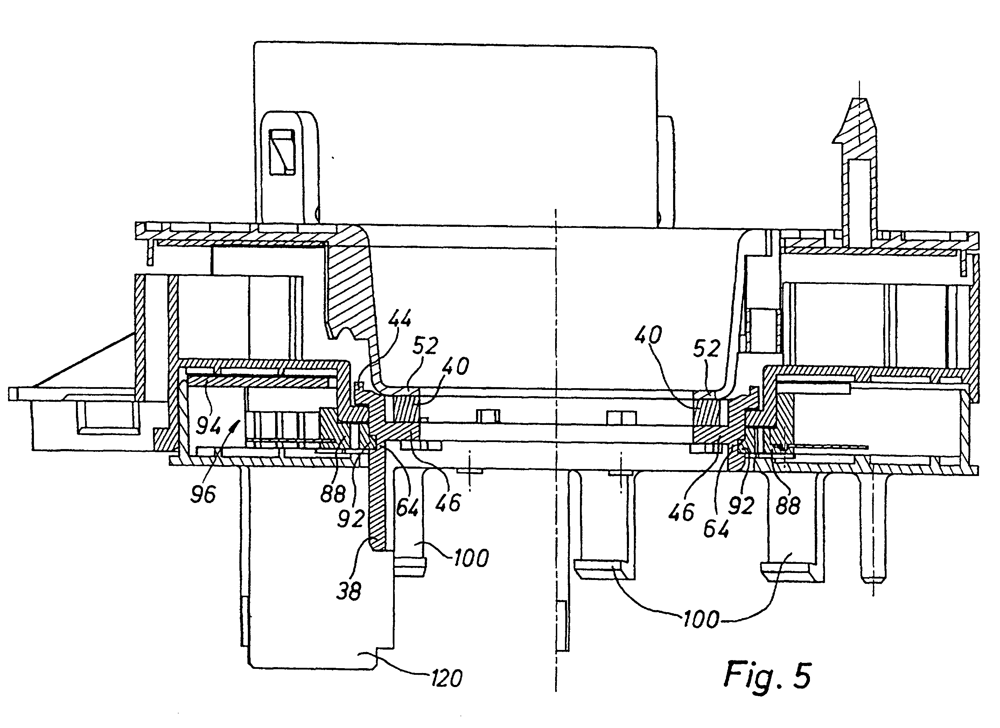

Die in den Fig. 4 und 5 dargestellte Übertragungseinheit 80 umfasst ein Lenkwinkelmesssystem 82. Die unter das Bezugszeichen 84 fallenden Bauteile entsprechen den Bauteilen der Übertragungseinheit 10 gemäß den Fig. 1 und 2. Anders als der Stator 14 der Übertragungseinheit 10 sieht die Übertragungseinheit 80 einen Stator 86 vor, der keine Befestigungsmittel aufweist und auf seiner dem Rotor 12 abgewandten Seite zur Aufnahme des Lenkwinkelmesssystems 82 geeignet ist.

Eine in der Fig. 4 mit der Bezugszahl 88 versehene Codierscheibe des Lenkwinkelmesssystems 82 weist einen zentralen Durchbruch 90 auf. In diesen Durchbruch 90 ragen Rastnasen 92, die zur Befestigung der Codierscheibe 88 mit den Einbuchtungen 64 an dem Mitnehmer 38 verrasten. Damit kann die Codierscheibe 88 drehfest an dem Mitnehmer 38 angeordnet werden.

Erfindungsgemäß ist auch denkbar, dass die Codierscheibe 88 einstückig mit dem Mitnehmer 38 ausgebildet sein kann.

Das Lenkwinkelmesssystem 82 sieht ferner eine Leiterplatine 94 vor, auf der im montierten Zustand verschiedene mechanische und elektrische Bauteile 96 zur Abtastung der Codierscheibe 88 bzw. zur Lenkwinkelerfassung vorgesehen sind. Die Leiterplatine 94 ist im monierten Zustand, wie in Fig. 5 dargestellt, auf der dem Rotor 12 abgewandten Seite des Stators 86 angeordnet. Zur Abdeckung des Lenkwinkelmesssystems 82 ist ein Gehäuseverschlussteil 98 vorhanden, das auf seiner dem Stator 84 abgewandten Seite Befestigungs- und Kommunikationsmittel 100, 120 entsprechend den Befestigungssmitteln 66 der Übertragungseinheit 10 und 70 aufweist.

Aufgrund der zu Fig. 1 und 2 beschriebenen Lagerung des Mitnehmers 38 wird bei der Übertragungseinheit 80 gewährleistet, dass die Codierscheibe 88 unabhängig von einem gegebenenfalls vorhandenen Versatz der Längsachse der Lenksäule und der Drehachse der Codierscheibe gleichförmig gedreht wird. Ferner werden Rundlauffehler der Lenksäule und/oder der Codierscheibe ausgeglichen.

Bei einer weiteren, nicht dargestellten Ausführungsform der Erfindung, die im Wesentlichen der Übertragungseinheit 80 entspricht, kann vorgesehen sein, dass die Befestigungsund Kommunikationsmittel nicht an dem Gehäuseverschlussteil 98, sondern auf der dem Rotor 12 abgewandten Seite des Stators 84 angeordnet sind. Die Befestigungs- und Kommunikationsmittel durchgreifen bei einer derartigen Ausführungsform die Leiterplatine 94 sowie das Gehäuseverschlussteil 98. Dies hat den Vorteil, dass unabhängig davon, ob eine Übertragungseinheit ein Lenkwinkelmesssystem vorsieht oder nicht, stets ein gleiches Gehäuseverschlussteil vorgesehen werden kann.

Die Übertragungseinheit 80 gemäß den Fig. 4 und 5 hat den Vorteil, dass die Codierscheibe 88 mittelbar über den Ausgleichsring 40 und den Mitnehmer 38 in der Lagerstelle des Rotors 12 gelagert wird. Eine zusätzliche Lagerstelle für die Codierscheibe 88 entfällt demnach. Außerdem baut die Übertragungseinheit 80 mit integriertem Lenkwinkelmesssystem 82 sehr kompakt. Unabhängig davon, ob ein Lenkwinkelmesssystem vorgesehen wird, wie es bei der Übertragungseinheit 80 der Fall ist, oder nicht vorgesehen wird, wie es bei der Übertragungseinheit 10 und 70 der Fall ist, finden identische Bauteile Verwendung.

Ein weiterer Vorteil der beschriebenen Übertragungseinheiten 10, 70 und 80 ist, dass sie entlang einer Linie durch Ineinanderstecken der einzelnen Bauteile montierbar sind.

Je nachdem, ob ein Lenkwinkelmesssystem 82 vorgesehen wird, weist der Stator 14 oder das Gehäuseverschlussteil 98 die Befestigungs- und Kommunikationsmittel 66 bzw. 100, 120 auf.

Figur 6 zeigt die Übertragungseinheit 80 verbaut mit einem Lenkstockschalter 110. Der Lenkstockschalter 110 weist ein Grundgehäuse 112 auf, innerhalb welchem zwei Schalthebel 114 verschwenkbar angeordnet sind. Zur Aufnahme einer nicht dargestellten Lenksäule weist das Grundgehäuse 112 in axialer Verlängerung zu dem hülsenartigen Abschnitt 28 des Rotors 12 einen zentralen Durchbruch 116 auf. Der Stator 14 ist über die in Figur 5 dargestellten Befestigungs- und Kommunikationsmittel 100 an dem Grundgehäuse 112 und über das Grundgehäuse 112 mittelbar an dem Fahrzeug befestigt.

Zur Halterung der Übertragungseinheit 80 an dem Lenkstockschalter 110 verrasten die vier Befestigungsmittel 66 in Form von Rasthaken mit an das Grundgehäuse 112 des Lenkstockschalters 110 angeformten Hinterrastungen 118.

Wie in Fig. 4 deutlich zu erkennen ist, weist der Mitnehmer 38 auf seiner dem Rotor 12 abgewandten Seite einen sich in axiale Richtung erstreckenden Mitnahmesteg 102 auf. In montiertem Zustand greift der Mitnahmesteg 102 in den zentralen Durchbruch 116 des Grundgehäuses 112 des Lenkstockschalters 110 ein. Bei Verdrehen des Lenkrades bzw. des Rotors 12 kann über den Mitnahmesteg 102 eine über einen Schalthebel 114 betätigbare Schaltfunktion, beispielsweise eine Blinkerschaltung, aufgehoben werden.

Der Mitnahmesteg 102 wirkt hierbei mit einer entsprechenden, in dem Grundgehäuse 112 angeordneten Schaltmechanik zusammen.

Wie aus Fig. 7 deutlich hervorgeht, ist neben dem Steckerelement 26 der Übertragungseinheit 80 ein weiteres Steckerelement 120 vorgesehen, das zur Aufnahme des in der Figur 4 dargestellten Steckerpins 122 des Lenkwinkelmesssystems 82 dient. Das Steckerelement 120 ist hierbei entlang einer Linie mit dem Steckerelement 26 angeordnet. In montiertem Zustand greifen die beiden Steckerelemente 120 und 26 durch zwei an dem Grundgehäuse 112 angeordnete Steckeraufnahmen 124 und 126. Vorteilhafterweise wird hierdurch erreicht, dass die elektrische Kontaktierung der Wickelfeder 24 und des Lenkwinkelsensors 82 von der der Übertragungseinheit 80 abgewandten Seite des Lenkstockschalters 110 erfolgen kann. Da der Lenkstockschalter 110 ebenfalls elektrische Kontaktierungen aufweist und diese auch auf der der Übertragungseinheit 80 abgewandten Seite des Lenkstockschalters 110 angeordnet sind, sind die Wickelfeder 24, der Lenkwinkelsensor 82 sowie die Schaltelektrik des Lenkstockschalters 110 von der gleichen Seite her zugänglich. Vorteilhafterweise kann vorgesehen sein, dass über lediglich einen, an das Grundgehäuse 112 andockbaren Stecker die Wickelfeder 24, das Lenkwinkelmesssysstem 82 und der Schaltelektronik des Lenkstockschalters 110 mit dem Bordnetz des Fahrzeuges kontaktiert werden.

## Patentansprüche

1. Übertragungseinheit (10, 70, 80) mit einem ortsfest an einem Fahrzeug anordenbaren Stator (14, 86) und mit einem mit dem Lenkrad bzw. mit der Lenksäule eines Fahrzeuges verbindbaren Rotor (12), mit Lagermitteln zur drehbaren Lagerung des Rotors (12) gegenüber dem Stator (14, 86) und mit einem Wickelband (24) zur Übertragung von elektrischen Signalen zwischen dem Rotor (12) und dem Stator (14, 86), **dadurch gekennzeichnet, dass** ein Mitnehmer (38) mittelbar über ein Ausgleichsstück (40) drehfest mit dem Rotor (12) verbunden ist, wobei über das Ausgleichsstück (40) ein radialer Versatz der Längsachse der Lenksäule und der Drehachse des Mitnehmers ausgeglichen werden kann, und dass an dem Mitnehmer (38) eine Codierscheibe (88) eines Lenkwinkelmesssystems (82) befestigt ist.

2. Übertragungseinheit (10, 70, 80) nach Anspruch 1, **dadurch gekennzeichnet, dass** die Lagermittel einen an dem Rotor (12) angeordneten, hülsenartigen Abschnitt (28) umfassen, der eine an dem Stator (14, 86) vorhandene Aussparung (36) mit einem vorgegebenen Radialspiel durch- und/oder hintergreift.

3. Übertragungseinheit (10, 80) nach Anspruch 1 oder 2, **dadurch gekennzeichnet, dass** der hülsenartige Abschnitt (28) Rastmittel (34) aufweist, die zur Lagerung des Rotors (12) die Aussparung (36) hinterrasten.

4. Übertragungseinheit (70) nach Anspruch 1, 2 oder 3 **dadurch gekennzeichnet, dass** der hülsenartige Abschnitt (28) zur Lagerung des Rotors (12) mit einem Gegenstück (72) verschraubbar ausgebildet ist.

5. Übertragungseinheit (10, 70, 80) nach einem der vorhergehenden Ansprüche, **dadurch gekennzeichnet, dass** der Mitnehmer (38) in axialer Richtung über Rastmittel (34) an dem Rotor (12) gehaltert ist, wobei zwischen dem Mitnehmer (38) und dem Rotor (12) das Ausgleichsstück (40) gefangen gehaltert ist.

6. Übertragungseinheit (10, 70, 80) nach einem der vorhergehenden Ansprüche, **dadurch gekennzeichnet, dass** der Mitnehmer (38) zur Befestigung der Codierscheibe (88) Rastnasen und/oder Rastbuchten (64) aufweist, die mit an der Codierscheibe (88) entsprechend vorhandenen Rastbuchten und/oder Rastnasen (92) zusammenwirken.

7. Übertragungseinheit nach einem der vorhergehenden Ansprüche, **dadurch gekennzeichnet, dass** der Mitnehmer zur Befestigung der Codierscheibe mit der Codierscheibe verschraubt werden kann.

8. Übertragungseinheit (10, 70, 80) nach einem der vorhergehenden Ansprüche, **dadurch gekennzeichnet, dass** der Mitnehmer einstückig mit einer Codierscheibe eines Lenkwinkelmesssystems ausgebildet ist.

9. Übertragungseinheit (10, 70, 80) nach einem der vorhergehenden Ansprüche, **dadurch gekennzeichnet, dass** an dem Stator (14, 86), insbesondere auf der dem Rotor (12) abgewandten Seite des Stators, ein Lenkwinkelmesssystem (82) mit Mitteln zur Erfassung der Winkelstellung der Codierscheibe (88) angeordnet ist bzw. angeordnet werden kann.

10. Übertragungseinheit (10, 70, 80) nach einem der vorhergehenden Ansprüche, **dadurch gekennzeichnet, dass** die dem Rotor (12) abgewandte Seite des Stators (14, 86) und gegebenenfalls das Lenkwinkelmesssystem (82) mit einem Gehäuseverschlussteil (98) abdeckbar ist.

11. Übertragungseinheit (10, 70) nach einem der vorhergehenden Ansprüche, **dadurch gekennzeichnet, dass** die dem Rotor (12) abgewandte Seite des Stators (14) Befestigungsmittel (66) zur Befestigung des Stators (14) an das Fahrzeug bzw. an einen Lenkstockschalter (110) aufweist.

12. Übertragungseinheit (10, 70) nach einem der Ansprüche 1 bis 11, **dadurch gekennzeichnet, dass** das Gehäuseverschlussteil Aussparungen aufweist, durch die die an dem Stator angeordneten Befestigungsmittel greifen.

13. Übertragungseinheit (80) nach einem der vorhergehenden Ansprüche, **dadurch gekennzeichnet, dass** das Gehäuseverschlussteil (98) auf der dem Stator (86) abgewandten Seite Befestigungsmittel (100) zur Befestigung des Stators (86) an das Fahrzeug bzw. an einen Lenkstockschalter (120) vorsieht.

14. Übertragungseinheit (10, 70, 80) nach einem der vorhergehenden Ansprüche, **dadurch gekennzeichnet, dass** das Ausgleichsstück (40) ein Ausgleichsring ist, der gegenüber dem Rotor (12)-entlang eines ersten Radius (r₁) und gegenüber dem Mitnehmer (38) entlang eines zweiten Radius (r₂) verschiebbar ist, wobei der Winkel zwischen den beiden Radien (r₁, r₂) vorzugsweise 90° beträgt.

15. Übertragungseinheit (10, 70, 80) nach Anspruch 14, **dadurch gekennzeichnet, dass** der Ausgleichsring (40) auf der einen Seite entlang des ersten Radius (r₁) und auf der anderen Seite entlang des zweiten Radius (r₂) jeweils zwei nutartige Aussparungen (54, 56) aufweist, wobei die dem Ausgleichsring (40) zugewandte Seite des Rotors (12) und die dem Ausgleichsring (40) zugewandte Seite des Mitnehmers (38) je zwei in die entsprechenden Aussparungen (54, 56) greifende stegartige Nasen (58, 60) aufweist.

## Claims

1. Transmission unit (10, 70, 80) with a stator (14, 86) which can be arranged stationarily on a vehicle and with a rotor (12) which can be connected to the steering wheel or to the steering column of a vehicle, with bearing means for rotatable mounting of the rotor (12) relative to the stator (14, 86) and with a winding tape (24) for transmitting electrical signals between the rotor (12) and the stator (14, 86), **characterised in that** a driver (38) is non-rotatably connected to the rotor (12), indirectly via a compensator (40), wherein a radial offset of the longitudinal axis of the steering column and the pivot axis of the driver can be compensated by the compensator (40), and **in that** a coding disc (88) of a steering angle measuring system (82) is fastened to the driver (38).

2. Transmission unit (10, 70, 80) according to claim 1, **characterised in that** the bearing means comprise a sleeve-like section (28) which is arranged on the rotor (12) and grasps through and/or behind a recess (36) on the stator (14, 86) with predetermined radial play.

3. Transmission unit (10, 80) according to claim 1 or 2, **characterised in that** the sleeve-like section (28) has latching means (34) which latch behind the recess (36) to mount the rotor (12).

4. Transmission unit (70) according to claim 1, 2 or 3, **characterised in that** the sleeve-like section (28) for mounting the rotor (12) is designed so it can be screwed to a counterpart (72).

5. Transmission unit (10, 70, 80) according to any one of the preceding claims, **characterised in that** the driver (38) is held on the rotor (12) via latching means (34) in the axial direction, the compensator (40) being captively held between the driver (38) and the rotor (12).

6. Transmission unit (10, 70, 80) according to any one of the preceding claims, **characterised in that** the driver (38) has latching noses and/or latching indentations (64) for fastening the coding disc (88) which cooperate with latching indentations and/or latching noses (92) correspondingly present on the coding disc (88).

7. Transmission unit according to any one of the preceding claims, **characterised in that** the driver can be screwed to the coding disc for fastening the coding disc.

8. Transmission unit (10, 70, 80) according to any one of the preceding claims, **characterised in that** the driver is designed integrally with a coding disc of a steering angle measuring system.

9. Transmission unit (10, 70, 80) according to any one of the preceding claims, **characterised in that** a steering angle measuring system (82) with means for detecting the angular position of the coding disc (88) is arranged or can be arranged on the stator (14, 86), in particular on the side of the stator remote from the rotor (12).

10. Transmission unit (10, 70, 80) according to any one of the preceding claims, **characterised in that** the side of the stator (14, 86) remote from the rotor (12), and optionally the steering angle measuring system (82) can be covered by a housing closure part (98).

11. Transmission unit (10, 70) according to any one of the preceding claims, **characterised in that** the side of the stator (14) remote from the rotor (12) has fastening means (66) for fastening the stator (14) to the vehicle or to a steering column switch (110).

12. Transmission unit (10, 70) according to any one of claims 1 to 11, **characterised in that** the housing closure part has recesses through which the fastening means arranged on the stator grasp.

13. Transmission unit (80) according to any one of the preceding claims, **characterised in that** the housing closure part (98) provides fastening means (100) on the side remote from the stator (86) for fastening the stator (86) to the vehicle or to a steering column switch (120).

14. Transmission unit (10, 70, 80) according to any one of the preceding claims, **characterised in that** the compensator (40) is a compensating ring which is displaceable relative to the rotor (12) along a first radius (r₁) and relative to the driver (38) along a second radius (r₂), the angle between the two radii (r₁, r₂) preferably being 90°.

15. Transmission unit (10, 70, 80) according to claim 14 **characterised in that** the compensating ring (40) has two respective groove-like recesses (54, 46) on one side along the first radius (r₁) and on the other side along the second radius (r₂), the side of the rotor (12) facing the compensating ring (40) and the side of the driver (38) facing the compensating ring (40) each having two web-like noses (58, 60) grasping into the corresponding recesses (54, 56)

## Revendications

1. Unité de transmission (10, 70, 80) avec un stator (14, 86) pouvant être disposé de façon fixe sur un véhicule et avec un rotor (12) pouvant être relié au volant ou à la colonne de direction d'un véhicule, avec des moyens d'appui pour le logement relatif du rotor (12) par rapport au stator (14, 86) et avec une bande d'enroulement (24) pour la transmission de signaux électriques entre le rotor (12) et le stator (14, 86), **caractériséee en ce qu**'un entraîneur (38) est relié directement au moyen d'une pièce de compensation (40) de façon résistante au rotor (12), un déport radial de l'axe longitudinal de la colonne de direction et de l'axe de rotation de l'entraîneur pouvant être compensé par une pièce de compensation (40), et en ce qu'un disque de codage (88) d'un système de mesure d'angle de braquage (82) est fixé sur l'entraîneur (38).

2. Unité de transmission (10, 70, 80) selon la revendication 1, **caractérisée en ce que** les moyens d'appui comprennent une partie (28) disposée sur le rotor (12) et en forme de douille, qui traverse et/ou saisit par l'arrière un évidement (36) présent sur le stator (14, 86) avec un jeu radial prédéfini.

3. Unité de transmission (10, 80) selon la revendication 1 ou 2, **caractérisée en ce que** la partie (28) en forme de douille présente des moyens d'encliquetage (34) qui s'engagent par l'arrière dans l'évidement (36) pour le logement du rotor (12).

4. Unité de transmission (70) selon la revendication 1, 2 ou 3, **caractérisée en ce que** la partie (28) du type douille pour le logement du rotor (12) est conçue de façon à pouvoir être vissée avec une pièce inverse (72).

5. Unité de transmission (10, 70, 80) selon l'une quelconque des revendications précédentes, **caractérisée en ce que** l'entraîneur (38) est maintenu sur le rotor (12) dans le sens axial par le biais de moyens d'encliquetage (34), la pièce de compensation (40) étant maintenue et retenue entre l'entraîneur (38) et le rotor (12)

6. Unité de transmission (10, 70, 80) selon l'une quelconque des revendications précédentes, **caractérisée en ce que** l'entraîneur (38) présente pour la fixation du disque de codage (88) des ergots d'encliquetage et/ou des ouvertures d'encliquetage (64), qui coopèrent avec des ouvertures d'encliquetage et/ou des ergots d'encliquetage (92) présents de façon appropriée sur le disque de codage (88).

7. Unité de transmission selon l'une quelconque des revendications précédentes, **caractérisée en ce que** l'entraîneur peut être vissé avec le disque de codage pour la fixation du disque de codage.

8. Unité de transmission (10, 70, 80) selon l'une quelconque des revendications précédentes, **caractérisée en ce que** l'entraîneur est conçu d'une seule pièce avec un disque de codage d'un système de mesure d'angle de braquage.

9. Unité de transmission (10, 70, 80) selon l'une quelconque des revendications précédentes, **caractérisée en ce qu'**un système de mesure d'angle de braquage (82) est disposé ou peut être disposé avec des moyens pour l'enregistrement de la position d'angle du disque de codage (88) sur le stator (14, 86), en particulier sur le côté, opposé au rotor (12), du stator.

10. Unité de transmission (10, 70, 80) selon l'une quelconque des revendications précédentes, **caractérisée en ce que** le côté, opposé au rotor (12), du stator (14, 86) et éventuellement le système de mesure d'angle de braquage (86) peut être recouvert avec une partie de fermeture de boîtier (98) .

11. Unité de transmission (10, 70) selon l'une quelconque des revendications précédentes, **caractérisée en ce que** le côté, opposé au rotor (12), du stator (14) présente des moyens de fixation (66) pour la fixation du stator (14) sur le véhicule ou sur un commutateur fixé à la colonne de direction (110).

12. Unité de transmission (10, 70) selon l'une quelconque des revendications 1 à 11, **caractérisée en ce que** la partie de fermeture de boîtier présente des évidements dans lesquels s'engagent les moyens de fixation disposés sur le stator.

13. Unité de transmission (80) selon l'une quelconque des revendications précédentes, **caractérisée en ce que** la partie de fermeture de boîtier (98) prévoit sur le côté opposé au stator (86) des moyens de fixation (100) pour la fixation du stator (86) sur le véhicule ou sur un commutateur fixé sur la colonne de direction (120).

14. Unité de transmission (10, 70, 80) selon l'une quelconque des revendications précédentes, **caractérisée en ce que** la pièce de compensation (40) est une bague de compensation qui peut être déplacée par rapport au rotor (12) le long d'un premier rayon (r₁) et par rapport à l'entraîneur (38) le long d'un second rayon (r₂), l'angle entre les deux rayons (r₁, r₂) étant de préférence de 90°.

15. Unité de transmission (10, 70, 80) selon la revendication 14, **caractérisée en ce que** la bague de compensation (40) présente deux évidements (54, 56) en forme de rainures sur un côté le long du premier rayon (r₁) et sur l'autre côté le long du second suivant rayon (r₂), moyennant quoi le côté, tourné vers la bague de compensation (40) du rotor (12) et le côté, tourné vers la bague de compensation (40), de l'entraîneur (38) présentent chacun deux ergots (58, 60) du type nervures qui s'engagent dans les évidements (54, 56) appropriés
